# EUROPÄISCHE PATENTSCHRIFT

(11) **EP 1 230 859 B1**
(45) Veröffentlichungstag und Bekanntmachung des Hinweises auf die Patenterteilung: **05.04.2006**
(21) Anmeldenummer: 02001225.8
(22) Anmeldetag: 17.01.2002
(51) Int. Cl.: A23B 4/28

(54) **Pökelmaschine mit hydraulisch abgefederten Nadeln**
Pickling apparatus with hydraulically operated needle system
Machine de saumurage à système d'aiguilles hydrauliques

(30) Priorität: 07.02.2001 DE 10105490
(43) Veröffentlichungstag der Anmeldung: 14.08.2002
(73) Patentinhaber: Schröder Maschinenbau KG, 33824 Werther (DE)
(72) Erfinder: Thomas, Manfred, 33775 Versmold (DE)
(74) Vertreter: TER MEER - STEINMEISTER & PARTNER GbR

(56) Entgegenhaltungen:
- EP-A- 1 163 850
- DE-A- 19 827 685
- GB-A- 2 181 035
- US-A- 3 656 424
- US-A- 3 683 789
- US-A- 4 437 397

## Beschreibung

Die Erfindung betrifft eine Pökelmaschine mit hydraulisch abgefederten Nadeln die zu mehreren an einem gemeinsamen Träger angeordnet sind, und mit einer Ventileinrichtung zum Steuern der Zufuhr von Lake zu den Nadeln sowie zu den Nadeln zugeordneten Druckzylindern für die Abfederung.

Bei einer solchen Pökelmaschine wird die Lake mit Hilfe der Nadeln unter Druck in das Pökelgut eingespritzt. Das Pökelgut wird auf einem Förderer unterhalb der Nadeln zugeführt, und durch Absenken des Trägers werden die Nadeln in das Pökelgut eingestochen. Mit Hilfe der Ventileinrichtung wird die Lakezufuhr so gesteuert, daß die Lake nur dann über die Nadeln abgegeben wird, wenn diese in das Pökelgut einstechen.

Die Zufuhr der Lake zu den Nadeln erfolgt zumeist über eine sämtlichen Nadeln gemeinsame Lakekammer, die in dem Träger ausgebildet ist. Zum Steuern der Lakezufuhr ist dann ein einziges Ventil ausreichend, das den Zufluß der Lake in die Lakekammer unterbricht.

Bei bestimmten Anwendungsfällen, beispielsweise beim Pökeln von Knochenschinken, sollten die Nadeln so abgefedert sein, daß sie relativ zum Nadelträger nach oben ausweichen können, falls sie beim Absenken des Trägers auf einen Knochen auftreffen. Andererseits müssen die Nadeln jedoch so stark nach unten vorgespannt sein, daß sie in das Pökelgut einstechen können. Dies läßt sich im Prinzip dadurch erreichen, daß an jeder Nadel ein Kolben ausgebildet ist, der in einem Druckzylinder geführt ist. Die einzelnen Nadeln sind dann über den jeweiligen Druckzylinder mit der Lakekammer verbunden, so daß der Kolben durch den Druck der Lake beaufschlagt wird. Die Wirkfläche des Kolbens ist so an den Druck der Lake angepaßt, daß die Kraft des Kolbens den Eindringwiderstand des Pökelgutes überwindet, wenn die Nadel eingestochen wird. Trifft die Nadel auf einen Knochen, so können die Nadel und der Kolben gegen den Druck der Lake nach oben zurückweichen.

Diese Lösung hat den Vorteil, daß keine mechanischen Bauelemente wie Druckfedern und dergleichen zum Abfedern der Nadel benötigt werden, so daß die Maschine baulich vereinfacht und sehr reinigungsfreundlich gestaltet werden kann. Ein Nachteil besteht jedoch darin, daß, wenn die Nadeln aus dem Pökelgut zurückgezogen sind und das Zufuhrventil gesperrt wurde, noch eine relativ große Lakemenge aus den Nadeln nachläuft. Dies führt zu einem erhöhten Lakedurchsatz und zu einer starken Verunreinigung der Arbeitsumgebung.

Dokument EP 1163850 offenbart ein Nadelregister für Pökelmaschinen, mit einer oder mehreren aus einer Druckkammer mit Lake gespeisten Nadeln und den einzelnen Nadeln zugeordneten Ventilen zur Steuerung des Lakeflusses.

Aufgabe der Erfindung ist es, eine Pökelmaschine der eingangs genannten Art zu schaffen, bei der das Nachlaufen von Lake aus den Nadeln unterdrückt wird.

Diese Aufgabe wird erfindungsgemäß dadurch gelöst, daß die Ventileinrichtung für jede Nadel ein gesondertes Ventil aufweist und daß die Druckzylinder durch die Ventile einzeln absperrbar sind.

Nach dem Absperren der Ventile steht somit jede einzelne Nadel nur noch mit dem relativ kleinen Volumen des zugehörigen Druckzylinders in Verbindung. Wenn die Nadel aus dem Pökelgut austritt und die Lake die Tendenz hat, aus der Nadel herauszutropfen, baut sich daher in dem Druckzylinder sehr rasch ein Unterdruck auf, der dem Nachlaufen der Lake entgegenwirkt. Eine Belüftung des Druckzylinders ist nicht möglich, da die Luft allenfalls durch die Nadel selbst eintreten könnte, die aber noch mit Lake gefüllt ist. Durch die hydraulische Trennung der einzelnen Druckzylinder wird vermieden, daß über einzelne Nadeln Luft in die Lakekammer eintritt und eine dem eintretenden Luftvolumen entsprechende Lakemenge aus anderen Nadeln abläuft. Durch die Erfindung wird somit eine sehr saubere Arbeitsweise mit geringstmöglichem Lakedurchsatz ermöglicht.

Vorteilhafte Ausgestaltungen der Erfindung ergeben sich aus den Unteransprüchen.

Bevorzugt sind die einzelnen Ventile als Schlauchventile ausgebildet, die unmittelbar an den oberen Enden der Druckzylinder angeordnet sind. Da sämtliche Ventile in einer gemeinsamen Ebene liegen, ist es möglich, alle Ventile synchron mit einem einzigen Abquetschgatter zu schließen, so daß zur Steuerung der Vielzahl der Ventile nur ein einziges Steuerorgan benötigt wird, beispielsweise in der Form eines Stößels, der das Abquetschgatter in die Abquetschposition bringt. Aufgrund der Eigenelastizität der Schläuche, die die einzelnen Schlauchventile bilden, kehrt das Abquetschgatter automatisch in die unwirksame Position zurück, wenn der Stößel entlastet wird. Somit werden keine zusätzlichen Rückstellelemente benötigt. Da die Nadel und der zugehörige Druckzylinder sowie das zugehörige Schlauchventil jeweils auf einer gemeinsamen vertikalen Achse angeordnet sind, wird die Reinigung des Lakesystems der Maschine beträchtlich erleichtert.

Üblicherweise weist eine Pökelmaschine einen Niederhalter auf, der relativ zum Nadelträger vertikalbeweglich geführt ist und von den unteren Enden der Nadeln durchsetzt wird. Dieser Niederhalter hat in erster Linie den Zweck, das Pökelgut von den Nadeln abzustreifen, wenn diese nach oben zurückgezogen werden. Es ist bekannt, daß die Relativbewegung zwischen Niederhalter und Nadelträger zur Steuerung der Lakezufuhr genutzt werden kann. Dies läßt sich bei der erfindungsgemäßen Maschine besonders einfach dadurch realisieren, daß an einem mit dem Niederhalter verbundenen Teil ein Nocken ausgebildet wird, der den Stößel beaufschlagt und somit sämtliche Schlauchventile schließt, wenn sich der Niederhalter in seiner unteren Endlage relativ zu den Nadeln befindet.

Gemäß einer zweckmäßigen Weiterbildung der Erfindung kann der Nocken auch so gestaltet sein, daß er die einzelnen Schlauchventile graduell öffnet und schließt, während sich der Niederhalter relativ zu den Nadeln nach oben bewegt. Auf diese Weise läßt sich der Lakedurchsatz durch die einzelnen Nadeln und damit die in das Pökelgut eingespritze Lakemenge wegabhängig steuern, so daß es beispielsweise möglich ist, in den Kernbereich des Pökelgutes eine größere Lakemenge zu injizieren als in die peripheren Bereiche. Die Wegabhängigkeit des Lakedurchsatzes läßt sich dabei durch eine geeignete Wahl der Steuerkurve an dem Nocken gezielt an das jeweilig Pökelgut anpassen. Dieses Funktionsprinzip läßt sich auch unabhängig von den Merkmalen des Anspruchs 1 mit Vorteil einsetzen.

Wenn sich der Niederhalter in seiner unteren Endlage befindet und die Schlauchventile durch den Nocken geschlossen gehalten werden, lassen sich die Nadeln relativ zum Träger nach oben bewegen, da die dabei aus den Druckzylindern verdrängte Lake aus den Nadeln abfließen kann. Sobald jedoch der Niederhalter angehoben wird und die Schlauchventile öffnen, werden die Kolben sämtlicher Nadeln wieder mit Druck beaufschlagt, so daß alle Nadeln in ihre untere Endlage relativ zum Nadelträger zurückkehren.

Wenn zwischen dem Öffnen der Schlauchventile und dem tatsächlichen Eindringen der Nadeln in das Pökelgut nur eine sehr geringe Vorlaufzeit besteht, kann es allerdings vorkommen, daß eine Nadel, die zuvor angehoben wurde, auch beim Eindringen in das Pökelgut noch etwas gegenüber den übrigen Nadeln zurückbleibt. Dieser unter Umständen unerwünschter Effekt läßt sich beispielsweise dadurch vermeiden, daß in jedem Druckzylinder eine vorzugsweise entnehmbare Druckfeder angeordnet wird, die den Kolben und die Nadel in die untere Endlage zurückstellt, schon bevor der Kolben mit Druck beaufschlagt wird. Eine andere Möglichkeit besteht darin, schon ein Anheben der Nadeln zu verhindern, indem die Nadeln in ihrer unteren Endlage arretiert werden, wenn sich der Niederhalter in der unteren Endlage befindet. Dies läßt sich mit Hilfe eines Riegel- oder Klemmelements erreichen, das ähnlich wie der Stößel der Ventileinrichtung durch einen Nocken betätigt wird.

Im folgenden wird ein Ausführungsbeispiel der Erfindung anhand der Zeichnung näher erläutert.

Es zeigen:
- Figur 1: einen vertikalen Schnitt durch die wesentlichen Teile einer Pökelmaschine im Zustand vor Beginn eines Pökelvorgangs;
- Figur 2: einen horizontalen Schnitt durch eine Ventileinrichtung der Pökelmaschine nach Figur 1; und
- Figur 3: einen vertikalen Schnitt durch die Pökelmaschine im Zustand während eines Pökelvorgangs.

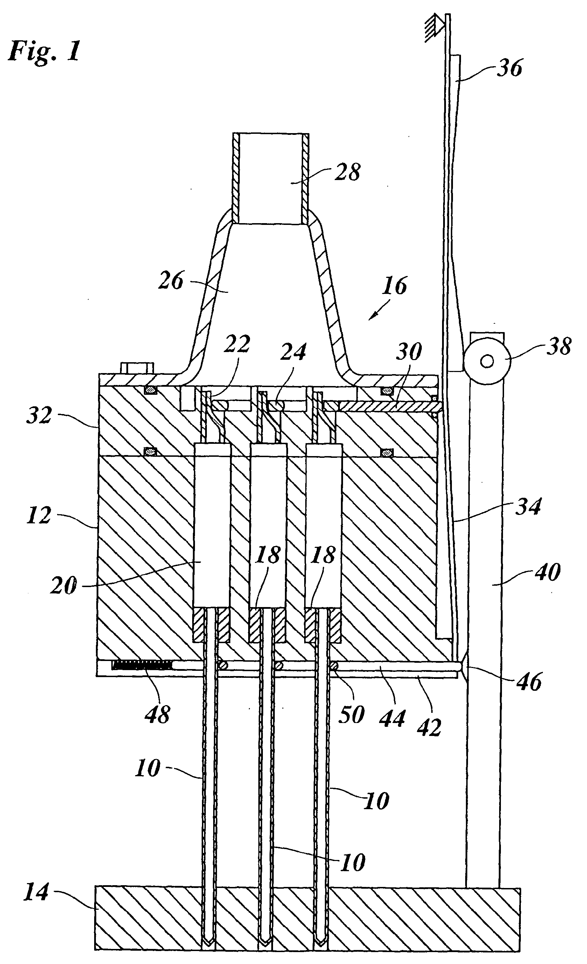

Die in Figur 1 gezeigte Pökelmaschine weist mindestens eine Gruppe hohler Nadeln 10 auf, die an einem Träger 12 gehalten sind. Der Träger 12 ist vertikalbeweglich an einem nicht gezeigten Führungsgestänge geführt und mit Hilfe eines nicht gezeigten Antriebs anheb- und absenkbar. Ein von den Nadeln 10 durchsetzter Niederhalter 14 ist mit Hilfe nicht gezeigter Führungen vertikalbeweglich an dem Träger 12 gehalten und elastisch nach unten vorgespannt. Wenn Pökelgut auf einem nicht gezeigten Förderer in eine Position unterhalb der unteren Enden der Nadeln 10 gebracht wurde, wird der Träger 12 abgesenkt, so daß sich der Niederhalter 14 auf das Pökelgut legt. Der Träger 12 und die Nadeln 10 bewegen sich dann ohne den Niederhalter 14 weiter nach unten, so daß die Nadeln in das Pökelgut einstechen. Durch eine auf dem Träger 12 angeordnete Ventileinrichtung 16 wird Lake unter Druck in die einzelnen Nadeln zugeführt. Diese Lake wird dann durch Öffnungen in den unteren Endbereichen der Nadeln 10 in das Pökelgut eingespritzt.

An jeder Nadel 10 ist am oberen Ende ein Kolben 18 befestigt, der verschiebbar in einem in dem Träger 12 ausgebildeten Druckzylinder 20 geführt ist. Für jede Nadel 10 ist ein gesonderter Druckzylinder 20 vorgesehen, und die Ventileinrichtung 16 weist für jeden dieser Druckzylinder 20 ein gesondertes Ventil 22 auf, das hier als Schlauchventil ausgebildet ist. Die Ventile 22 werden jeweils durch ein kurzes vertikales Schlauchstück aus elastischem Material gebildet, das koaxial zum Druckzylinder 18 am oberen Ende desselben angeordnet ist und im geschlossenen Zustand mit Hilfe eines Abquetschgatters 24 abgequetscht wird, wie in Figur 1 gezeigt ist.

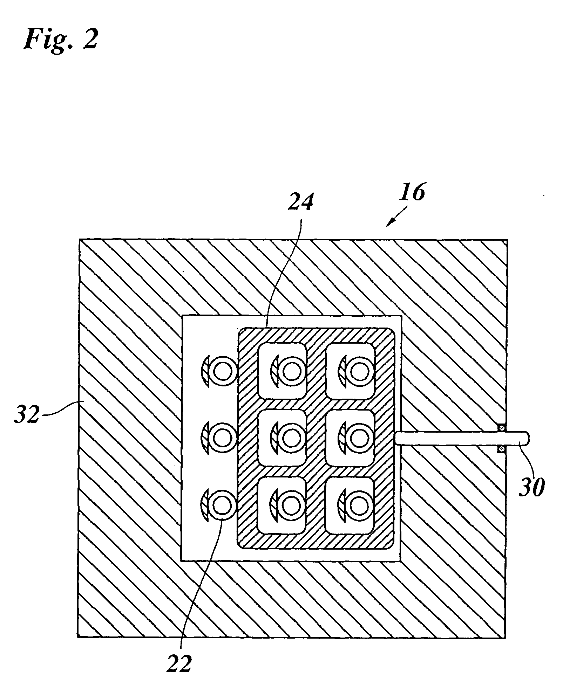

Figur 2 zeigt die Ventile 22 in geöffnetem Zustand sowie das zugehörige Abquetschgatter 24 in der Draufsicht.

Wie Figur 1 zeigt, liegen sämtliche Ventile 22 am Boden einer gemeinsamen, druckdicht geschlossenen Lakekammer 26, der über einen Zulauf 28 mit Hilfe einer nicht gezeigten Förderpumpe Lake unter Druck zugeführt wird.

Das Abquetschgatter 24 wird durch die Eigenelastizität der Schlauchventile 22 in Öffnungsrichtung, also nach rechts in Figur 1, vorgespannt, wird jedoch in dem in Figur 1 gezeigten Zustand durch einen Stößel 30 in der Abquetschposition gehalten. Das freie Ende des Stößels 30 ragt aus einem die Ventileinrichtung 16 aufnehmenden Block 32 heraus und wird durch eine Blattfeder 34 beaufschlagt. Die Blattfeder 34 weist auf der vom Stößel abgewandten Seite 30 in einer gegenüber dem Stößel versetzten Position einen Nocken 36 auf. Dieser Nokken wirkt mit einer Rolle 38 zusammen, die an einer vom Niederhalter 14 aufragenden Säule 40 angeordnet ist.

In dem in Figur 1 gezeigten Zustand nimmt der Niederhalter 14 relativ zu dem Träger 12 seine untere Endlage ein, so daß die Spitzen der Nadeln 10 geschützt in Bohrungen des Niederhalters liegen. Durch den Nocken 36, der sich an der Rolle 38 abstützt, wird die Blattfeder 34 so ausgelenkt, daß sie den Stößel 30 in den Block 32 hineindrückt, so daß sämtliche Ventile 22 durch das Abquetschgatter 24 abgequetscht werden. Somit ist in diesem Zustand die Lakezufuhr zu den Nadeln 10 unterbrochen. Die Elastizität der Blattfeder 34 ermöglicht es, die Abquetschkraft des Abquetschgatters 24 so zu dosieren, daß die Schlauchventile 22 dicht geschlossen gehalten aber nicht beschädigt werden.

An der Unterseite des Trägers 12 ist im gezeigten Beispiel eine Führung 42 angeordnet, in der ein leiterförmiges Klemmelement 44 horizontalbeweglich geführt ist. Durch einen an der Säule 40 angeordneten Nocken 46 wird das leiterförmige Klemmelement 44 entgegen der Kraft einer Rückstellfeder 48 in einer Position gehalten, in der seine Sprossen 50 an den einzelnen Nadeln 10 anliegen. Die Sprossen 50 haben eine gewisse Eigenelastizität und üben damit auf die Nadeln 10 eine Klemmkraft aus, durch die diese in der gezeigten Position gehalten werden, in der der Kolben 18 seine untere Endlage einnimmt.

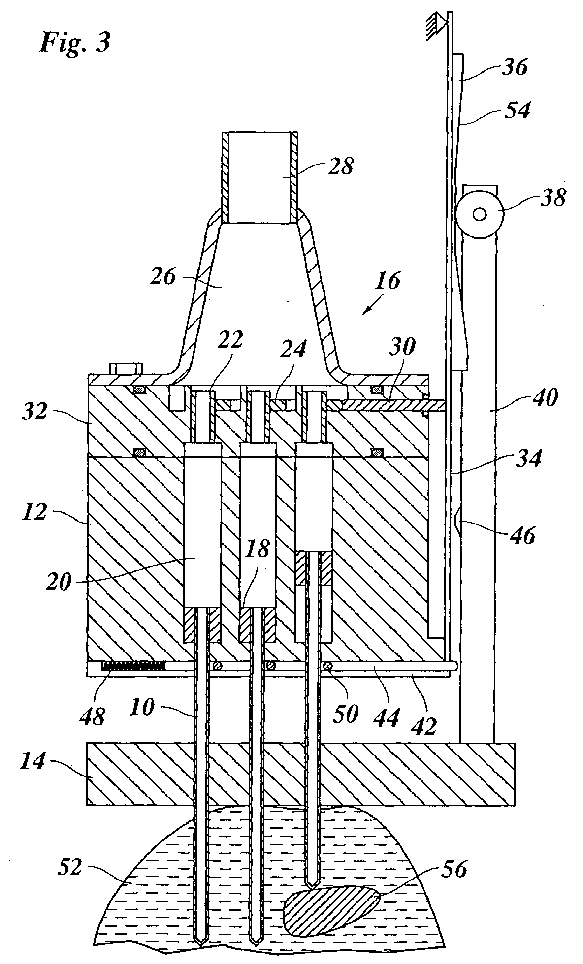

Figur 3 illustriert den Zustand, in dem während des Pögelvorgangs der Träger 12 abgesenkt wird. Der Niederhalter 14 liegt auf dem Pökelgut 52 auf und wird somit relativ zum Träger 12 angehoben, während die Nadeln 10 in das Pökelgut eindringen. Der Nocken 46 hat das Klemmelement 44 freigegeben, und die Rückstellfeder 48 hat das Klemmelement etwas nach rechts bewegt, so daß die Sprossen 50 nicht mehr an den Nadeln 10 anliegen. Die Rolle 38 fährt an einer Steuerkontur 54 des Nockens 36 entlang. Diese Steuerkontur 54 ist so geformt, daß die Blattfeder 34 in ihre Neutralstellung zurückkehren konnte. Die Schlauchventile 22 konnten deshalb das Abquetschgatter 24 und den Stößel 30 nach rechts verschieben und sind nunmehr offen, so daß die Lake in die Druckzylinder 20 eindringen kann. Die Kolben 18 werden somit durch den Druck der Lake beaufschlagt und üben eine gewisse abwärts gerichtete Kraft auf die Nadeln 10 aus, so daß die Nadeln in das Pökelgut 52 eindringen. Gleichzeitig wird die Lake durch die Nadeln in das Pökelgut eingespritzt.

In dem in Figur 3 gezeigten Beispiel ist eine der Nadeln 10 auf einen Knochen 56 gestoßen, der das weitere Eindringen der Nadel verhindert. Der dadurch erzeugte Widerstand ist so groß, daß sich der zugehörige Kolben 18 entgegen dem Druck der Lake im Druckzylinder 20 nach oben bewegt.

Im gezeigten Beispiel ist die Steuerkontur 54 des Nockens 36 so geformt, daß die Ventile 22 am Beginn des Einspritzvorgangs nur allmählich geöffnet werden und sich gegen Ende des Einspritzvorgangs, wenn sich die Rolle 38 weiter nach oben bewegt, wieder etwas schließen, so daß der Lakedurchsatz reduziert wird. Auf diese Weise wird eine wegabhängige Steuerung des Lakedurchsatzes durch die Ventile 22 und die Nadeln 10 erreicht. Wahlweise können für die einzelnen Nadeln oder Nadelgruppen auch separate Stößel und unterschiedlich gestaltete Nocken verwendet werden, so daß jede Nadel oder Nadelgruppe eine andere Einspritzcharakteristik aufweist.

Der Träger 12 wird, nachdem er ganz abgesenkt wurde, wieder angehoben, so daß die Nadeln 10 aus dem Pökelgut zurückgezogen werden. Dabei kehrt auch die Nadel, die durch den Knochen 56 zurückgedrückt wurde, in ihre untere Endlage zurück. Während die Nadeln aus dem Pökelgut herausgezogen werden, wird das Pökelgut durch den Niederhalter 14 niedergehalten. Wenn der Niederhalter 14 wieder seine untere Endlage in bezug auf den Träger 12 erreicht, wird das Klemmelement 44 durch den Nocken 46 wieder in die Klemmstellung verschoben, so daß die Nadeln dann gegen eine vertikale Bewegung relativ zum Träger 12 gesichert sind. Gleichzeitig läuft die Rolle 38 auf den unteren Teil des Nockens 36 auf, so daß die Ventile 22 durch den Stößel 30 wieder geschlossen werden. Da jeder einzelne Druckzylinder 20 durch das zugehörige Ventil 22 dicht geschlossen gehalten wird, kann keine Luft in den Druckzylinder eindringen und es kann somit keine Lake aus der zugehörigen Nadel entweichen.

## Patentansprüche

1. Pökelmaschine mit hydraulisch abgefederten Nadeln (10), die zu mehreren an einem gemeinsamen Träger (12) angeordnet sind, und mit einer Ventileinrichtung (16) zum Steuern der Zufuhr von Lake zu den Nadeln (10) sowie zu den Nadeln (10) zugeordneten Druckzylindern (20) für die Abfederung, **dadurch gekennzeichnet, daß** die Ventileinrichtung (16) für jede Nadel (10) ein gesondertes Ventil (22) aufweist und daß die Druckzylinder (20) durch die Ventile (22) einzeln absperrbar sind.

2. Pökelmaschine nach Anspruch 1, **dadurch gekennzeichnet, daß** die Ventile (22) als Schlauchventile ausgebildet und jeweils koaxial am Ende des zugehörigen Druckzylinders (20) angeordnet sind.

3. Pökelmaschine nach Anspruch 2, **dadurch gekennzeichnet, daß** die Ventile (22) durch ein gemeinsames Abquetschgatter (24) abquetschbar sind.

4. Pökelmaschine nach Anspruch 2 oder 3, **dadurch gekennzeichnet, daß** die Ventile (22) durch einen quer zu den Nadeln (10) bewegbaren Stößel (30) schließbar sind und daß ein Niederhalter (14), der relativ zu dem Träger (12) in der Richtung parallel zu den Nadeln (10) bewegbar ist, den Stößel (30) über einen Nocken (36) betätigt.

5. Pökelmaschine nach Anspruch 4, **dadurch gekennzeichnet, daß** der Nocken (36) über eine Blattfeder (34) auf den Stößel (30) wirkt.

6. Pökelmaschine nach einem der vorstehenden Ansprüche, **dadurch gekennzeichnet, daß** die Nadeln (10) bei geschlossenen Ventilen (22) elastisch oder mittels eines Riegel- oder Klemmelements (44) in ihrer aus dem Träger (12) ausgefahrenen Endlage gehalten sind.

7. Pökelmaschine nach Anspruch 6, **dadurch gekennzeichnet, daß** das Klemmelement (44) an der Stelle, an der die Nadeln (10) aus dem Träger (12) austreten, eine quergerichtete Klemmkraft auf die Nadeln (10) ausübt.

8. Pökelmaschine nach Anspruch 4 und einem der Ansprüche 6 und 7, **dadurch gekennzeichnet, daß** das Riegel- oder Klemmelement (44) durch einen mit dem Niederhalter (14) bewegbaren Nocken (46) betätigbar ist.

9. Pökelmaschine, insbesondere nach einem der vorstehenden Ansprüche, mit mehreren an einem Träger (12) angeordneten Nadeln (10), einem in Längsrichtung der Nadeln (10) relativ zu dem Träger (12) bewegbaren Niederhalter (14) und einer durch die Relativbewegung von Niederhalter (14) und Träger (12) betätigbaren Ventileinrichtung (16) zum Steuern der Zufuhr von Lake zu den Nadeln (10), **dadurch gekennzeichnet, daß** der Niederhalter (14) auf die Ventileinrichtung (16) über einen Nocken (36) einwirkt, der eine Steuerkontur (54) bildet, die eine allmähliche, stufenlose Verstellung der Ventileinrichtung (16) in Abhängigkeit vom Weg des Niederhalters (14) relativ zum Träger (12) bewirkt, so daß die pro Zeiteinheit von der Ventileinheit (16) durchgelassene Lakemenge von der Einstechtiefe der Nadeln (10) in das Pökelgut (52) abhängig ist.

## Claims

1. Pickling machine having hydraulically damped needles (10), a plurality of which are arranged on a common carrier (12), and having a valve device (16) for controlling the supply of pickling agent to the needles (10) and pressure cylinders (20), which are associated with the needles (10), for the damping action, **characterised in that** the valve device (16) for each needle (10) has a separate valve (22), and **in that** the pressure cylinders (20) can be closed individually by the valves (22).

2. Pickling machine according to claim 1, **characterised in that** the valves (22) are in the form of flexible tubing type valves and are each arranged coaxially at the end of the associated pressure cylinder (20).

3. Pickling machine according to claim 2, **characterised in that** the valves (22) can be squeezed by a common squeezing grid (24).

4. Pickling machine according to claim 2 or 3, **characterised in that** the valves (22) can be closed by a tappet (30) which can be moved transversely relative to the needles (10), and **in that** a hold-down member (14) which can be moved relative to the carrier (12) in the direction parallel with the needles (10) actuates the tappet (30) via a cam (36).

5. Pickling machine according to claim 4, **characterised in that** the cam (36) acts on the tappet (30) via a leaf spring (34).

6. Pickling machine according to any one of the preceding claims, **characterised in that** the needles (10) are held in the end position thereof extended out of the carrier (12) resiliently or by means of a locking or clamping element (44) when the valves (22) are closed.

7. Pickling machine according to claim 6, **characterised in that** the clamping element (44) applies a transversely directed clamping force to the needles (10) at the location at which the needles (10) extend out of the carrier (12).

8. Pickling machine according to claim 4 and either claim 6 or 7, **characterised in that** the locking or clamping element (44) can be actuated by a cam (46) which can be moved with the hold-down member (14).

9. Pickling machine, in particular according to any one of the preceding claims, having a plurality of needles (10) which are arranged on a carrier (12), and having a hold-down member (14) which can be moved relative to the carrier (12) in the longitudinal direction of the needles (10), and having a valve device (16), which can be actuated by the relative movement of the hold-down member (14) and the carrier (12), in order to control the supply of pickling agent to the needles (10), **characterised in that** the hold-down member (14) acts on the valve device (16) via a cam (36) which forms a control contour (54) which brings about a gradual stepless adjustment of the valve device (16) in accordance with the path of the hold-down member (14) relative to the carrier (12) so that the pickling agent quantity which is allowed through by the valve unit (16) per time unit is dependent on the insertion depth of the needles (10) in the material (52) for pickling.

## Revendications

1. Machine à saumurer comportant des aiguilles (10) suspendues sur ressorts qui sont disposées à plusieurs sur un support (12) commun, et comportant un dispositif à soupapes (16) pour commander l'arrivée de saumure aux aiguilles (10) ainsi qu'à des cylindres de pression (20) associés aux aiguilles (10) pour la suspension, **caractérisée en ce que** le dispositif à soupapes (16) comporte pour chaque aiguille (10) une soupape (22) séparée et **en ce que** les cylindres de pression (20) peuvent être fermés individuellement par les soupapes (22).

2. Machine à saumurer selon la revendication 1, **caractérisée en ce que** les soupapes (22) sont réalisées sous la forme de valves de gonflage et sont disposées chacune coaxialement à l'extrémité du cylindre de pression (20) correspondant.

3. Machine à saumurer selon la revendication 2, **caractérisée en ce que** les soupapes (22) peuvent être écrasées par une grille d'écrasement (24) commune.

4. Machine à saumurer selon la revendication 2 ou 3, **caractérisée en ce que** les soupapes (22) peuvent être fermées par un poussoir (30) déplaçable transversalement aux aiguilles (10) et **en ce qu'**un organe presseur (14), qui est déplaçable parallèlement aux aiguilles (10) par rapport au support (12), actionne le poussoir (30) par l'intermédiaire d'une came (36).

5. Machine à saumurer selon la revendication 4, **caractérisée en ce que** la came (36) agit sur le poussoir (30) par un ressort à lame (34).

6. Machine à saumurer selon l'une des revendications précédentes, **caractérisée en ce que** lorsque les soupapes (22) sont fermées, les aiguilles (10) sont maintenues, élastiquement ou au moyen d'un élément de verrouillage ou élément de serrage (44), dans leur position de fin de course extraite du support (12).

7. Machine à saumurer selon la revendication 6, **caractérisée en ce que** l'élément de serrage (44) exerce sur les aiguilles (10) une force de serrage dirigée transversalement, à l'emplacement auquel les aiguilles (10) ressortent du support (12).

8. Machine à saumurer selon la revendication 4 et l'une des revendications 6 et 7, **caractérisée en ce que** l'élément de verrouillage ou élément de serrage (44) peut être actionné par une came (46) déplaçable avec l'organe presseur (14).

9. Machine à saumurer, en particulier selon l'une des revendications précédentes, comportant plusieurs aiguilles (10) disposées sur un support (12), un organe presseur (14) déplaçable par rapport au support (12) dans la direction longitudinale des aiguilles (10) et un dispositif à soupapes (16) pouvant être actionné par le mouvement relatif de l'organe presseur (14) et du support (12), pour commander l'arrivée de saumure aux aiguilles (10), **caractérisée en ce que** l'organe presseur (14) agit sur le dispositif à soupapes (16) par l'intermédiaire d'une came (36) qui forme un contour de commande (54) lequel provoque un déplacement progressif continu du dispositif à soupapes (16), en fonction de la course de l'organe presseur (14) par rapport au support (12), ce qui fait que la quantité de saumure distribuée par unité de temps par l'unité à soupapes (16) dépend de la profondeur d'enfoncement des aiguilles (10) dans le produit à saumurer (52).
